Europäisches Patentamt

European Patent Office

Office européen des brevets

(11) Publication number: **0 417 911 A1**

# EUROPEAN PATENT APPLICATION

(21) Application number: **90308889.6**

(51) Int. Cl.⁵: **C09K 3/32**

(22) Date of filing: **13.08.90**

(30) Priority: **14.08.89 FR 8910867**
    **01.12.89 FR 8915908**

(43) Date of publication of application:
    **20.03.91 Bulletin 91/12**

(84) Designated Contracting States:
    **AT BE CH DE DK ES FR GB GR IT LI LU NL SE**

(71) Applicant: **Vannier, Eric Felix**
    **32 rue des Ardenets**
    **F-58000 Nevers(FR)**

Applicant: **Vannier, Maryse Monique**
**32 rue des Ardenets**
**F-58000 Nevers(FR)**

Applicant: **Gerard, Max Wilhiam**
**Route de Billy-Oisy**
**F-58500 Clamecy(FR)**

Applicant: **Gerard, Irene**
**Route de Billy-Oisy**
**F-58500 Clamecy(FR)**

(72) Inventor: **Gerard, Max Wilhiam**
**Route de Billy-Oisy**
**F-58500 Clamecy(FR)**
Inventor: **Gerard, Irene**
**Route de Billy-Oisy**
**F-58500 Clamecy(FR)**

(54) **A process for neutralising hydrocarbon pollution and products therefor.**

(57) A process for combating pollution caused by liquid hydrocarbons involves spreading partially dehydrated calcium sulphate over the slick. The calcium sulphate is prepared by dehydrating natural gypsum at between 100° C. and 170° C, suitably for 1 to 4 hours. It is preferably in a particulate form, the majority of particles being from 1 to 100 μm in size.

EP 0 417 911 A1

## A PROCESS FOR NEUTRALISING HYDROCARBON POLLUTION AND PRODUCTS THEREFOR

The present invention relates to a process for combating pollution either in water or on land which originates from the dispersion of hydrocarbons on the surface of the waters and/or of the ground or from the proliferation of a parasitic flora.

It is well known that the release of large quantities of hydrocarbons accidentally spilt onto water or land can be catastrophic for flora and fauna, particularly at the coast and on river banks. The most frequent type of accident, which is much lamented, is on the surface of the sea, generally close to the coasts, near the routes followed by oil carrying ships. These generally result from dramatic occurrences, such as shipwrecks, strandings, collisions, etc. The consequences of a mass of liquid hydrocarbon spreading over the surface of the sea is well known, and has been condemned. Each new accident constitutes so many ecological disasters and catastrophes.

This type of accident can also occur on land, although this will generally be on a smaller scale. Such accidents can occur, for example, when a storage tank is ruptured or following an accident between tankers, this can cause the liquid hydrocarbons to flow into still waters or other water courses. Accidents can also occur in refineries and at ports and airports.

The worldwide increase in oil consumption, with the increase in the handling of such products which results therefrom, unfortunately tends to multiply the risks of spillage and consequently increases the number of disasters each year. Various processes and specific products intended to combat this hydrocarbon pollution have been proposed.

Such proposed solutions have included the conventional construction of floating dams and the positioning of machines which travel over the surface of the polluted water absorbing or reabsorbing part of the polluting liquid. There have also been many proposals of products which are intended to be spread on the surface of the polluted water which are designed to annihilate or neutralise the harmful effects of polluting hydrocarbons, these include dispersing agents, which can be more harmful than the hydrocarbon itself.

Attempts have been made in the past to employ the absorbing potentials of natural mineral substances such as a slake lime, but it is apparent that the absorbing power of lime remains limited with time and does not allow any rapid result to be obtained.

The time factor is particularly vital for the cases where pollution has occurred on sea coasts. Hydrocarbons spread on rocks and beaches have to be cleaned within a limited period of time corresponding to the time interval separating two successive high tides. Conventional products spread on the surface of the ground are not capable of acting efficiently within this time period, and the subsequent new tide disturbs the process of absorbing the hydrocarbons, resulting in the work having to be repeated.

Better methods of cleaning the coast when polluted tend to involve mechanical removal with a brush and water jets. This is costly use of labour and can only be effected with the aid of detergent compositions which also have a negative effect on the flora and fauna.

FR-A-1570245 discusses neutralising oils in and on water, using highly porous materials such as aerated concrete. This material is suitably ground to a particle size of 1 to 10 millimetres which can then be used to absorb the polluting hydrocarbons. Other materials proposed for this function include perlite, pumice, porous bricks or gypsum, which has an elevated porosity.

FR-A-2168060 is a Utility Certificate which relates to a process for eliminating oils and oily impurities from water. This process involves a chemical reaction between gypsum and bicarbonate although it is also proposed to use plasters or gypsums to absorb the oil or oily impurities.

US 4251362 discloses a method for processing hydrocarbons which have been spilt on the sea by spraying them with material such as the alpha form of calcium sulphate semi-hydrate, preferably mixed with peat to make it absorbent, mixing this oil with sufficient water to cause the calcium sulphate to form gypsum and thence a plaster. The slab of material formed, with the immobilized oil, can then be picked up mechanically and incinerated.

Recent experience has shown that the known methods do not measure up to the scale of cleaning up major oil spills where thousands of tons of fuel or heating oil are spilt onto the sea.

The present invention aims to ameliorate the problems and proposes a further simple and efficient process for combating hydrocarbon pollution both on water surfaces and on land.

According to one aspect of the present invention there is provided a process for combating pollution caused by liquid hydrocarbon on land or in aqueous medium, or a parasitic flora, which comprises spreading partially dehydrated calcium sulphate over the polluted area or slick, the partially hydrated calcium sulphate having been prepared from natural gypsum by dehydrating at a temperature between

2

100°C and 170°C, and the process including the absorption of the pollutant by the partially dehydrated calcium sulphate, whereby the pollutant is neutralised.

We have discovered that the partially dehydrated calcium sulphate referred to above, which is suitably a calcium sulphate semi-hydrate, has an exceptional affinity for hydrocarbons (such as fuel oil, heating oil, etc.) which are conventional sources of pollution. This permits the physical absorption of hydrocarbon phases within a very short period of time into a support consisting of the partially dehydrated calcium sulphate in its pulverized state, followed by aggregation. Thus this form of calcium sulphate forms a matrix which supports the liquid hydrocarbon phase and ensures that the heavy hydrocarbon molecules are retained within the matrix thus ensuring that the hydrocarbon phase is trapped within the solid phase and is therefore completely neutralised against the environment. This form of calcium sulphate can absorb up to its own weight in hydrocarbons while forming a neutral complex which is neither physically nor chemically aggressive towards the environment.

Thus, as the present invention provides a process which instead of attacking hydrocarbon molecules with chemicals which risks secondary damage to the environment, which results in the formation of a non-aggressive mineral substance which can remain harmlessly in the marine environment, or, if required, be collected, mechanically from the edge of beaches or the coast.

Gypsum is a natural rock which is readily available and cheap. It is already produced for production of plaster of paris intended for building and construction industries, and so a technology for producing it already exists. Traditional plaster is formed from gypsum dehydrated at a temperature in the region of 300°C but gypsum dehydrated in this way does not produce a product which works in the present method. The product required for use in the process can be obtained by extraction of conventional gypsum provided that when it is dried, the dehydration step is that specified above. This can be done by using, for example, rotary drum ovens (Grelbin oven type). Thus the products required to put the present invention into effect can be readily obtained and stocks can be established ahead of the possible needs. It is known that the degree of hydration of natural gypsum is lowered by heating and the following reaction is known, especially with respect to the manufacture of plaster:

$$2 \ CaSO_4.2H_2O \ = \ 2 \ CaSO_4.H_2O \ + \ 3 \ H_2O$$

According to another aspect of the invention there is provided a partially hydrated calcium sulphate produced by dehydrating gypsum at a temperature between 130°C and 170°C. The invention also provides a method of producing partially hydrated calcium sulphate and its use in combating pollution.

Preferably the calcium sulphate semi-hydrate is obtained from heating at a temperature below 165°C or more preferably between 130°C and 160°C. and most preferably between 135°C and 145°C. The heat treatment is preferably conducted for a period of between one and four hours, most preferably, about two hours. A preferred form of the product can be defined as one which has a setting time after rehydration of seven minutes in the case of a product leaving a dryer and of ten minutes in the case of a product which has stored for two months in a silo.

It has been found from tests and experiments carried out by the inventors that by adjusting the degree of dehydration of the calcium sulphate (natural gypsum) in a manner suitably controlled in respect of the temperature and of the period of treatment the dehydrated sulphate obtained had different absorption properties towards different hydrocarbons. The physical characteristics, specially the densities of the hydrocarbons, vary according to the number of carbon atoms in the chain, and they can be very diverse. Crude oil contains a mixture of diverse hydrocarbons which, while it is generally encountered in the liquid state, contains solid (heavy phases) and gases (light phases) in solution. The visible characteristics of crude oil can thus vary considerably and may depend on their origin. For example, crude oil originating from the Sahara may consist of relatively light fractions corresponding on average to the composition of diesel fuel whereas crude originating from the Persian Gulf is much denser. The risks of pollution on water or on land generally stem from the spillage of relatively dense mixtures comprising a preponderance of heavy fractions and especially when it is a spillage of crude oil or heating oil, or more rarely of a diesel fuel. Pollution also results from the spillage of mineral oils, such as lubricating oils or flushing oils which also have heavier fractions i.e. with the number of carbon atoms equal to or greater than ten. In contrast light fractions resulting especially from the refining of crude oil and used as motor vehicle fuel cause less damage.

Thus the present invention also provide a partially de-hydrated calcium sulphate which can be specifically targeted at the grade of hydrocarbon spilt, and it also enables the type of treatment product to be adjusted according to the characteristics of each pollutant.

To this end is has been found that partially dehydrated calcium sulphate which has been treated at a temperature in the region of 135°C for an average period of two hours is especially useful in absorbing relatively heavy hydrocarbons such as heating oils or lubricating oils. Calcium sulphate dehydrated at about 140°C is useful in neutralising sump oil.

It must be understood that the degree of dehydration for each calcium sulphate molecule within a batch will vary. This results from the transition of natural gypsum to calcium sulphate hemihydrate which results not in loss of water of retention by evaporation, but by the chemical reaction in which each molecule of calcium sulphate successively loses half a molecule of water. Therefore the reaction, at the level of each molecule, can be regarded as an "all or nothing" type of reaction. However, the overall reaction, at the batch level, continues with time and in such a way that all or some of the molecules of calcium sulphate can lose their hydration or chemically bound water as a function of temperature and duration of treatment. Thus it is possible by adjusting both the temperature and the duration, to produce partially dehydrated calcium sulphate where the degree of hydration is of the required fractions.

The partially dehydrated calcium sulphate which is used may be in a pulverized state. Suitably the majority of particles are between 1 and 100 microns in size and more preferably are between 2 and 50 microns.

When this partially dehydrated calcium sulphate is used on polluted waters it may be dispersed in a pulverized form on the surface of the water where it can be left in contact with the hydrocarbons until they are thoroughly absorbed. This then precipitates to form an aggregate or thick slurry at the bottom, the hydrocarbon products absorbed within the absorption phase being neutralised.

The particlaly dehydrated calcium sulphates used in the process can include additives such as surface active agents (anionic or cationic), dispersants and/or flocculants.

A process devised in accordance with the invention has a broad field of application and can in particular be used any time a hydrocarbon or product of an oily consistency (essentially mineral oils but also natural oils) is accidentally dispersed over water, or land. More particularly, the invention provides a method for efficiently combating hydrocarbon pollution on seas, around coasts, or in harbours each time large quantities of fuel oil, petroleum, heating oil, etc., escape from oil tankers, either through accident or negligence on unloading. The invention is also applicable to oil refineries, ports and spillages in airports.

Examples of products suitable for use in neutralising hydrocarbons are now described by way of example.

Natural gypsum (dry and therefore containing no water of retention) was treated at a temperature of 135°C for two hours, the resulting calcium sulphate was found to be particularly effective in absorbing mineral oils of the lubricating oil type, which corresponded to relatively heavy hydrocarbon fractions, especially those having carbon atom numbers equal to or greater than 10.

Experimental studies were carried out on solid supports consisting of pebbles from the sea coast, which were sprinkled copiously with drained sump oil, these were then covered in powdered calcium sulphate which had been treated at 135°C and the solid supports were then thrown back into the sea. After three minutes they were taken out, the pebbles now showed no trace of oil, and no iridescent trace appeared on the surface of the water. In fact the surface of the pebbles appeared to be clearer than the surface exhibited before they were coated in drained sump oil.

Three troughs were filled with drinking water and each was subjected to a spillage of drained sump oil. Dehydrated calcium sulphate was prepared by dehydrating at 140°C, 150°C and 160°C to give three separate batches. These contained a particle size where the majority of particles were between 2 and 50 microns in size. Each trough was treated with a separate batch of dehydrated gypsum. The calcium sulphate dehydrated at 140°C completely absorbed the hydrocarbon phase spread on the surface of the water in trough I. Once the pulverulent material had absorbed all the hydrocarbon phase it precipitated to the bottom of the trough leaving no trace on the surface. The calcium sulphate dehydrated at 150°C also produced satisfactory results, but the reaction time was slower for trough II than that observed for the calcium sulphate dehydrated at 140°C. Trough III treated with calcium sulphate dehydrated at 160°C also gave satisfactory results, but only after several days and after the addition of further treatment.

Tests were also carried out on the ground, on a relatively non-absorbent substrate (concrete, tarmac). Drained sump oil and heating oil type were the hydrocarbons tested in this way. The calcium sulphate semi-hydrate, dehydrated at a 140°C, was sprinkled over the hydrocarbon: a positive result was achieved immediately with the calcium sulphate absorbing the hydrocarbon and forming an aggregate which closely resembled gravel. After a few minutes it was possible to sweep the aggregate up, leaving a clear and clean ground without any trace of grease or oil, and without the appearance of a slippery surface. Repetition of this study on wet and dry ground produced the same results.

Thus it can be seen that calcium sulphate whose degree of dehydration is obtained in the temperature range of 135°C to 140° make products with affinity for heavy hydrocarbon fractions, whereas calcium sulphate dehydrated at higher temperatures may have greater affinity for lower density hydrocarbons.

It is therefore possible to prepare stores of products corresponding to batches of at least partially dehydrated calcium sulphate which have been subjected to heat treatments at more or less elevated degrees of temperature for various periods of time, such batches of a partially dehydrated calcium sulphate have specific characteristics which are adapted to different types of hydrocarbons.

Calcium sulphate which has been dehydrated at a temperature in the region of 135°C to 140° virtually permits instantaneous absorption of liquid hydrocarbons having a carbon number greater or equal to 10. This includes crude oil, mineral oils, such as lubricating oils, heating oils as well, possibly, as diesel fuel.

The pulverised state of the dehydrated calcium sulphate may also be varied for different cases, but generally, it will be within the particle size ranger defined above. These are suitable for dispersion on the surface of liquid or land, which have been subject to pollution and are covered in a hydrocarbon phase. It can be sprinkled again and again until all the hydrocarbon phase has been completely absorbed.

A sample of gypsum originating from the Taverny-Bessancourt quarry was ground to obtain the following particle size characteristics:

| Sieve (mm) | 5 | 2 | 1 | 0.4 | 0.2 | 0.08 | 0.05 |
|---|---|---|---|---|---|---|---|
| % passing | 87.2 | 79.5 | 74.1 | 59.1 | 37.2 | 9.9 | 4.6 |

1 kg of this sample of gypsum was heated from room temperature (approximately 20°C) up to the desired temperature. The maximum sample heating temperatures were staged between 130°C and 160°C according to the samples. The time taken to raise the temperature in the oven was about 1 hour. The sample was left at the maximum temperature for 15 minutes before being taken out of the oven.

Another series of tests have also been carried out on a sample of gypsum from the same source, but with a different moisture content. These tests produced the same results as in the first series of tests but these were treated in ovens where the temperature rise was taken over 1 hour, 15 minutes, the plateau at the maximum temperature being maintained for a about 15 minutes. This took account of the different moisture content.

A sample of gypsum preheated at 135°C was brought into contact with a deposit of drained sump oil. It was found that the material dehydrated in this way absorbed the drained sump oil, forming a compact "clot" which was easily removed by mechanical means.

## Claims

1. A process for combating pollution caused by liquid hydrocarbon on land or in aqueous medium, or a parasitic flora, which comprises spreading partially dehydrated calcium sulphate over the polluted area, the partially dehydrated calcium sulphate having been prepared from natural gypsum by dehydrating at a temperature between 100°C and 170°C, and the process including the absorption of the pollutant by the partially dehydrated calcium sulphate, whereby the pollutant is neutralised.

2. A process according to claim 1 wherein the dehydration of the gypsum occurs between 130°C and 165°C.

3. A process according to claim 1 or claim 2 wherein the dehydration of the gypsum occurs between 135°C and 145°C.

4. A process according to any one of claims 1 to 3 wherein the gypsum is dehydrated for between 1 and 4 hours.

5. A process according to any one of the preceding claims wherein the partially dehydrated calcium sulphate is particulate, the majority of the particles having a size of between 1 and 100 μm.

6. A process according to claim 5 wherein the majority of particles have a size between 2 and 50 μm.

7. A process according to claims 5 or 6 wherein the particulate material is dispersed over the polluted surface and is left in contact with the hydrocarbons until a thorough absorption has occurred, the particulate material then precipitating in aqueous medium to aggregate at the bottom.

8. A process according to any one of the preceding claims wherein the partially dehydrated calcium sulphate incorporates additives selected from surface active (anionic or cationic) agents, dispersants and flocculants.

9. A partially dehydrated calcium sulphate produced by dehydrating gypsum at a temperature between 130°C and 170°C.

10. A partially dehydrated calcium sulphate according to claim 9 produced by dehydrating gypsum at a temperature between 135°C and 145°C. optionally for between 1 and 4 hours.

11. A partially dehydrated calcium sulphate according to claim 9 or claim 10 which is particulate, the majority of the particles having a size of between 1 and 100 μm.

12. A method of preparing a partially dehydrated calcium sulphate according to any one of claims 9 to 11.

13. Use of a partially dehydrated calcium sulphate according to any one of claims 9 to 11 in a process for combating pollution caused by liquid hydrocarbon on land or in aqueous medium, or a parasitic flora, which comprises spreading the partially dehydrated calcium sulphate over the polluted area.

14. Use of a partially dehydrated calcium sulphate according to claim 13 in the sea, around coasts, in harbours, ports, oil refineries or airports.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 006 776 (TILLIE)<br>* Claims 1,6,16,19 *<br>--- | 1-4,7,<br>13,14 | C 09 K    3/32 |
| A | DE-A-3 644 826 (WARNKE)<br>----- | | |

**TECHNICAL FIELDS SEARCHED (Int. Cl.4)**

C 09 K

The present search report has been drawn up for all claims

| Place of search | Date of completion of the search | Examiner |
|---|---|---|
| THE HAGUE | 08-10-1990 | NICOLAS H.J.F. |

EPO FORM 1503 03.82 (P0401)